# EUROPEAN PATENT SPECIFICATION

(11) **EP 0 993 197 B1**
(45) Date of publication and mention of the grant of the patent: **20.01.2010**
(21) Application number: 99119180.0
(22) Date of filing: 07.10.1999
(51) Int. Cl.: H04N 7/26

(54) **A method and an apparatus for the animation, driven by an audio signal, of a synthesised model of human face**
Verfahren und Vorrichtung zur durch ein Audiosignal gesteuerten Animation eines synthetisierten Modells eines menschlichen Gesichts
Procédé et appareil pour l'animation assistée par un signal audio d'un modèle synthétisé de visage humain

(30) Priority: 07.10.1998 IT TO980842
(43) Date of publication of application: 12.04.2000
(73) Proprietor: Telecom Italia S.p.A., 20123 Milano (IT)
(72) Inventor: Lande, Claudio, 10134 Torino (IT); Quaglia, Mauro, 10900 Montalenghe (Torino) (IT)
(74) Representative: Appelt, Christian W.

(56) References cited:
- EP-A- 0 710 929
- WO-A-97/36288
- US-A- 5 657 426
- ISO/IEC JTC1/SC 29 WG11: "MPEG-4 Overview - (Dublin version) N2323" July 1998 (1998-07) , INTERNATIONAL ORGANIZATION FOR STANDARDIZATION - ORGANISATION INTERNATIONALE DE NORMALISATION XP002120014 * page 22, paragraph 2.5.2.1 - page 23, paragraph 2.5.2.1 *
- "INFORMATION TECHNOLOGY - CODING OF AUDIO-VISUAL ABJECTS: VISUAL ISO/IEC 14496-2" INTERNATIONAL ORGANIZATION FOR STANDARDIZATION - ORGANISATION INTERNATIONALE DE NORMALISATION, XX, XX, no. N2202, March 1998 (1998-03), pages 1-329, XP000861689
- FABIO LAVAGETTO: "CONVERTING SPEECH INTO LIP MOVEMENTS: A MULTIMEDIA TELEPHONE FOR HARD OF HEARING PEOPLE" IEEE TRANSACTIONS ON REHABILITATION ENGINEERING, IEEE INC. NEW YORK, US, vol. 3, no. 1, 1 March 1995 (1995-03-01), pages 90-102, XP000501203 ISSN: 1063-6528

## Description

This invention concerns audio-visual or multimedia communication systems and in particular a method and an apparatus for the animation, driven by parameters derived from audio sources of a synthesised human face model.

At present, development activities for multimedia applications are considering the integration of natural and synthetic audio-visual objects with increasing interest, in order to facilitate and improve the user-application interaction. In such an area, adopting anthropomorphous models to facilitate the man-machine interaction is being envisaged. Such interest has been also perceived by international standardisation bodies, and the ISO/IEC standard 14496, "Generic Coding of Audio-Visual Objects", has entered at present its definition phase. Said standard, which is commonly known as the "MPEG-4 standard" and is hereinafter referred to by such term, is aimed among other things at providing a reference framework for said applications.

Regardless of the specific solutions given by the MPEG-4 standard, the anthropomorphous models are thought of as an ancillary means to other information streams and are seen as objects capable of animation, where the animation is driven, by way of an example, by audio signals, such as the voice. In that case it is necessary to develop animation systems that, in synchronism with the voice itself, can deform the geometry and the look of the models in such a way that the synthetic faces take up typical countenances related to speech. The requisite target is a talking head or face that has a look as much as possible close to reality.

The application contexts of animated models of that kind may range from Internet applications, such as welcome messages or on line assistance messages, to co-operative work applications (for instance, electronic mail readers), as well as to professional applications, such as the implementation of post-production effects in the film and TV industry, to video games, and so on.

The models of human faces are generally implemented starting from a geometric representation formed by a 3-D mesh structure or "wire frame". The animation is based on the application in sequence and without interruption of appropriate deformations of the polygons forming the mesh structure (or of a subset of such polygons) in such a way as to achieve the required effect during the display phase, namely in the specific case the rendering of the movements of the jaw and lip region.

The solution defined by the MPEG-4 standard envisages for such a purpose the use of a set of face animation parameters, defined independently of the model, so as to ensure the interworking of the systems. This set of parameters is organised on two layers: the upper layer is formed by the so called "visemes" which represent the positions of the speaker's mouth in correspondence with the phonemes (i.e. the elementary sound units); the lower layer represents instead the elementary deformations to be applied in correspondence with the different visemes. The standard precisely defines how lower layer parameters must be used, whereas it does not set constraints on the use of upper layer parameters. The standard defines a possible association between phonemes and visemes for the voice driven animation; thereafter relating parameters shall have to be applied to the model adopted.

Different methods of achieving animation are known from literature. By way of an example, one can mention the following papers: "Converting Speech into Lip Movements: A Multimedia Telephone for Hard of Hearing People", by F. Lavagetto, IEEE Transactions on Rehabilitation Engineering, Vol.3, No. 1, March 1995; DIST, University of Genoa, "Description of algorithms for Speech-to-Facial Movements Transformations", ACTS "SPLIT" Project, November 1995; TUB, Technical University of Berlin, "Analysis and Synthesis of Visual Speech Movements", ACTS "SPLIT" Project, November 1995.

The first document describes the possibility of implementing animation starting from phonemes, by identifying the visemes associated and transforming the visemes into articulatory parameters to be applied to a model; alternatively it suggests the direct transformation of spectral information into articulatory parameters through a neural network adequately trained. However the adopted articulatory parameters are not the facial animation parameters envisaged by MPEG-4 standard and therefore the suggested method is not flexible. Also the two papers presented at the ACTS "SPLIT" Project do not describe the use of facial animation parameters foreseen by MPEG-4 standard; further the obtained parameters are only aimed at choosing an image from a database containing images of lips in different positions (corresponding to the various visemes).

According to this invention, a method and an apparatus for animation are provided that are able to receive visemes and to apply the appropriate geometric deformations to any facial model complying with MPEG-4 standard. Besides assuring a much higher quality, this allows the user to observe the synthetic speaker in positions different from the frontal one, to move closer to or away from it, etc.

More particularly, the invention provides a method according to claim 1.

The invention also concerns the apparatus for the implementation of the method according to claim 1.

In the paper "Lips and Jaw Movements for Vowels and Consonants: Spatio-Temporal Characteristics and Bimodal Recognition Applications" by P. Cosi and E. Magno Caldognetto, presented at the NATO-ASI Workshop on Speech Reading (Bonas, France, 28 August to 10 September 1995) and published in "Speech Reading by Human Machines" edited by D. G. Stork, M: E. Henneke, NATO - ASI Series 150, Berlin, Springer-Verlag, 1996, pages 291 to 314, the possibility is mentioned of characterising a viseme through four macro-parameters, namely:
- mouth width (hereinafter referred to as LOW from the initials of Lip Opening Width)
- vertical distance between lips (hereinafter referred to as LOH, from the initials of Lip Opening Height)
- jaw opening (hereinafter indicated as JY)
- lip protrusion (hereinafter indicated as LP)
and it is said in general that each of those macro-parameters is associated to an intensity value. Nevertheless, the above-cited paper essentially concerns the study of interactions between voice and facial movements and does not envisage the application of results to the facial animation, for which the actual knowledge of the intensity values is an essential condition for the achievement of an animated model which is as natural as possible.

To better clarify the invention, reference is made to the attached drawings, where:
- Figure 1 is a block diagram of an animation system which makes use of the invention, and
- Figure 2 is a general flow chart of the animation method according to the invention.

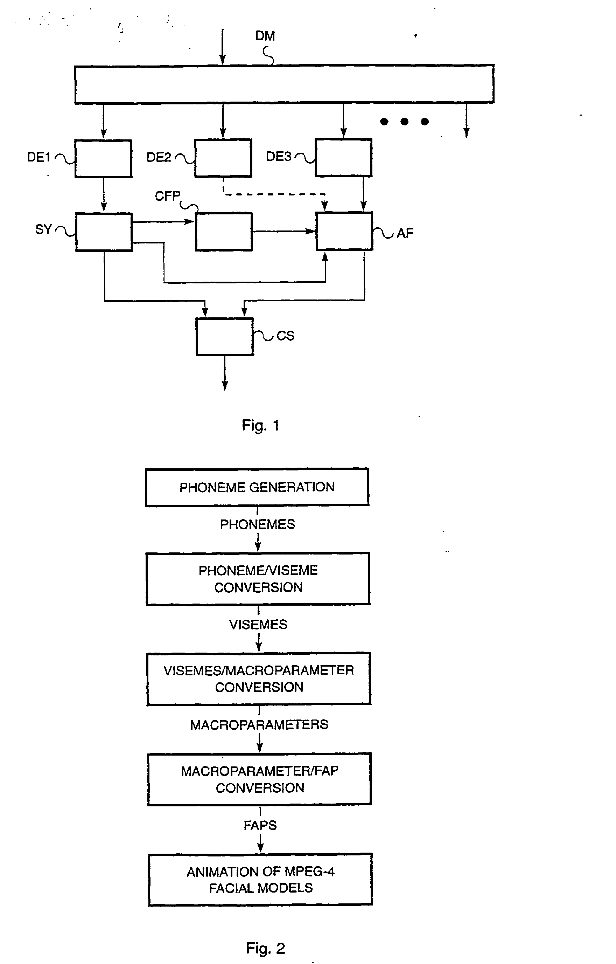

Figure 1 shows the insertion of a facial animation system into an MPEG-4 decoder. In general, an MPEG-4 decoder includes a demultiplexer DM which: receives a composite stream containing a number of elementary streams, each relating to a component of a multimedia signal representing the coding of a given scene, splits the composite stream into its individual streams and provides them to respective decoders DE1, DE, DE3 ...

In the case of interest for this invention, in which the scene to be rendered includes a synthesised image of a human face that has to be animated on the basis of a given text, these elementary streams concern at least some of the following information: text; the animation parameters (FAP = Facial Animation Parameters); parameters (known as facial definition parameters or FDP), to be used for calibrating the specific facial model to which animation will be applied.

To perform animation, resort can be made to two general solutions:
- the first solution envisages that, during the coding phase, the scene of interest is processed in such a way as to cause the transmission to the decoder of a composite stream including both the audio channel and the relating animation parameters, together with the time information (time stamps) required for synchronisation between speech and animation; all information required for the animation is therefore already included in the coded stream, and the decoder must only provide for reconstruction of the scene by introducing the different objects (i.e. audio, animated image, background, etc);
- the second solution leaves to the decoder the entire rendering of animation, starting from phonetic data extracted for instance from a text included in a coded stream, or extracted from a file or even provided by a voice recogniser, etc.

In both solutions the presence of information about the model (FDP) in the coded stream is optional.

The second solution is particularly interesting for use in a telecommunications network, since the bandwidth requirements for a text transmission are much lower than those for the direct transmission of a video channel and an audio channel associated to it (a few tens of characters, depending on text length, compared to a bandwidth from some kbit/s to some Mbit/s).

Therefore the invention concerns a solution of this kind, and the figure illustrates the case in which the text for the animation is included in the coded stream.

The decoded text, provided for instance by decoder DE1, is supplied to a voice synthesiser SY of any known type, able to provide at the output both the phonemes (i.e. the elementary sound units) and the corresponding synthesised audio. As an example, it is assumed that the synthesiser being used is the synthesis system ELOQUENS™ of the Applicant, the characteristics of which are widely described in literature. More details on this synthesiser can be found e.g. in European Patent Application EP 0 706 170.

The phonemes are provided to a unit CFP for their conversion into the so called facial animation parameters, i.e. parameters defining elementary facial deformations; said parameters are in turn supplied to a facial animation module AF which, upon control of the synthesis module SY, applies the required deformation to the model, by taking into account the information relating to the facial definition parameters received for instance from decoder DE3. The synthesised audio signal and the animated model are then sent to a scene composition module CS, which carries out the combination of the animated model with the audio, the insertion of the background, etc.

The dotted line link between module AF and decoder DE2 schematises the above-cited possibility of directly using animation parameters sent by the decoder.

It must be noted that, in order to obtain a natural animation, the scene composition module must guarantee a good synchronisation between the model animation and the synthesised audio. Experience and studies have proven that the user does not perceive misalignments if the time distance between the lips movement of the model and the audio lies in the range -40 ms to +120 ms, and that quality is still acceptable if the time distance lies in the range -90 ms to +180 ms. As far as this aspect is concerned, it must also be specified that the synthesis module SY does not generate phonemes in a continuous way, but it supplies groups of phonemes corresponding to the sentence or the part of the sentence which is read from the input text. As a consequence, facial animation module AF must keep track of which phoneme is being used at a given time: this is achieved through appropriate time information provided by synthesis module SY.

As already said, instead of being provided by a synthesis unit SY, the phonemes can be supplied by a voice recogniser, read from a file, received from a continuous stream, etc. The way in which the phonemes are generated, however, is not a part of this invention, which concerns the operations carried out by conversion module CFP.

Obviously, it is essential that such phonemes are represented in a form that allows their electronic processing. By way of an example, it may be assumed that the representation is based on the SAMPA alphabet (Speech Assessment Methods Phonetic Alphabet), which allows the representation of phonemes of a number of languages in a machine readable format. Substantially, SAMPA codes the symbols of the international phonetic alphabet (IPA) through 7-bit ASCII characters. More details about SAMPA are not required for the comprehension of this invention and may be found at the Internet site
http://www.phon.ucl.ac.uk/home/sampa/home.htm.

The general diagram of the process is represented in the flow chart of Figure 2. The following description makes reference by way of an example to the Italian language; however, as previously stated, an alphabet such as SAMPA describes the phonemes of a number of languages and therefore it is straightforward for the technician to adapt what follows to a different language.

As can be seen, the first operation following the extraction of phonemes is their conversion into visemes. As already said, the MPEG-4 standard defines an association among groups of phonemes and visemes and in particular it defines 14 visemes that are associated to groups of phonemes which are common to many European languages. The visemes defined by such a standard are listed in Table 1, where the first column shows the viseme index according to the standard, the second one contains the phonemes associated to the viseme and the third one gives some examples of Italian language (or English language, for some phonemes) words containing such phonemes.

**TABLE 1**

| Viseme Index | Phonemes | Examples |
|---|---|---|
| 1 | p, b, m | poi, bene, mai |
| 2 | f, v | f-ato, v-oce |
| 3 | T, D | think, that |
| 4 | t, d | t-orta, d-ono |
| 5 | k, g | c-asa, g-as |
| 6 | tS, dZ, S | a-c-ido, z-aino, sc-i |
| 7 | s, z | s-aio, s-draio |
| 8 | n, l | n-ano, l-atte |
| 9 | r | o-r-ata |
| 10 | A: | c-a-mino |
| 11 | e | e-quinozio |
| 12 | l | i-gnoto |
| 13 | Q | t-o-tale |
| 14 | U | l-u-cernario |

This group of visemes is supplemented, for languages requiring so (among which Italian language), by an additional group relating to stressed vowels. In particular for Italian language the following visemes have been introduced:

**TABLE 2**

| Viseme Index | Phoneme | Examples |
|---|---|---|
| 15 | a | p-a-tto |
| 16 | E | s-e-lva |
| 17 | i | r-i-to |
| 18 | O | t-o-ndo |
| 19 | u | t-u-tto |

The set of visemes which one requires for use is stored into an appropriate memory associated to CFP and addressed by the corresponding phoneme.

The next step is the characterisation of such visemes through macroparameters. The invention makes use of the four macroparameters LOW, LOH, JY, LP mentioned before, and for each viseme it associates a value or intensity to each macroparameter. Such intensities have been identified in a preliminary operation phase starting from approximate values that have been determined in a heuristic way and have been gradually refined on the basis of subjective evaluations, aimed at improving the likelihood of the facial model animation. In particular, optimum intervals of intensity values have been defined, as shown in the following Table 3:

**TABLE 3**

| Viseme | LOH | JY | LOW | LP |
|---|---|---|---|---|
| 1 | -88 ö -64 | 4 ö 12 | 14 ö 30 | 10 ö 22 |
| 2 | 58 ö 102 | 4 ö 15 | 66 ö 114 | -86 ö -46 |
| 3 | 188 ö 320 | 18 ö 36 | 13 ö 27 | 4 ö 12 |
| 4 | 225 ö 385 | 215 ö 365 | 53 ö 95 | -74 ö -40 |
| 5 | 107 ö 185 | 9 ö 21 | 116 ö 200 | 2 ö 8 |
| 6 | 353 ö 613 | 328 ö 568 | 13 ö 27 | 71 ö 125 |
| 7 | 203 ö 345 | 168 ö 286 | 19 ö 39 | 2 ö 6 |
| 8 | 28 ö 52 | 4 ö 12 | 14 ö 30 | 10 ö 22 |
| 9 | 42 ö 78 | 4 ö 12 | 22 ö 42 | 17 ö 35 |
| 10 | 304 ö 516 | 274 ö 464 | 28 ö 52 | -79 ö -43 |
| 11 | 274 ö 464 | 182 ö 310 | 28 ö 52 | -79 ö -43 |
| 12 | 244 ö 412 | 182 ö 310 | 28 ö 52 | 28 ö 52 |
| 13 | 244 ö 412 | 134 ö 230 | -206 ö -120 | 74 ö 130 |
| 14 | 244 ö 412 | 148 ö 252 | -206 ö -120 | 74 ö 130 |
| 15 | 414 ö 814 | 413 ö 733 | 13 ö 27 | -156 ö -90 |
| 16 | 304 ö 516 | 213 ö 361 | 13 ö 27 | -79 ö -43 |
| 17 | 274 ö 464 | 213 ö 361 | 13 ö 27 | -79 ö -43 |
| 18 | 274 ö 464 | 224 ö 380 | -284 ö -166 | 90 ö 156 |
| 19 | 244 ö 412 | 149 ö 255 | -284 ö -166 | 90 ö 156 |

The present invention uses the macroparameters in a manner different from that described in the above-cited paper by P. Cosi and E. Magno Caldognetto (4), since the values of the macroparameters do not represent an absolute measure, but a difference with respect to the neutral position defined in the MPEG-4 standard (the intensities of macroparameters may therefore take up positive and negative values). In other terms, the standard defines a neutral position for a facial model and in such a position all the intensities of the macroparameters are zero. Intensities of macroparameters characterising the visemes indicate a difference with respect to such neutral position and the positive or negative sign indicate that the concerned elements are moving away from or closer to the neutral position. The values of the macroparameters and of the facial animation parameters, to be described in the sequel, are expressed in the so called "Facial Animation Parameter Units" (FAPU) which are normalised measurement units, characteristic of the individual parameters, described in that standard. The possibility of choosing the intensities within an interval results in an improved system flexibility.

The macroparameters are in turn split into facial animation parameters (FAP) MPEG-4. The conversion from macroparameter into facial animation parameters is carried out by identifying which parameters form a given macroparameter and the respective intensities. For instance, macroparameter LP (lip protrusion) is created through the facial animation parameters "push_b_lip" and "push_t_lip", which define the bottom lip and the top lip protrusion, respectively.

By definition, the facial animation parameters are independent of the facial model used by the MPEG-4 terminal and therefore such a system allows the animation of any facial model complying with MPEG-4.

Table 4 show the splitting of the previous macroparameters into MPEG-4 FAPs. The "x" variable represents the value of the parameter derived from Table 3. Column in Table 4 "Intensity Interval" shows the value interval within which the intensity of each MPEG-4 FAP can be chosen. The adoption of a value interval is due to the same considerations set forth about the use of a value interval for macroparameters.

**TABLE 4**

| LOH | MPEG-4 FAP Index | FAP Name | Intensity Interval |
|---|---|---|---|
| | 4 | lower_t _midlip | -3/20x ö -1/20x |
| | 5 | raise_b_midlip | -x ö -8/10x |
| | 8 | lower_t_lip_lm | -1/10x ö 0 |
| | 9 | lower_t _lip_rm | -1/10x ö 0 |
| | 10 | raise_b_lip_lm | -9/10x ö -7/10x |
| | 11 | raise_b_lip_rm | -9/10x ö -7/1x |
| | 12 | raise_l_cornerlip | -1/2x ö -1/4x |
| | 13 | raise_r_cornerlip | -1/2x ö -1/4x |
| | 51 | lower_t_midlip_o | -3/20x ö -1/20x |
| | 52 | raise_b_midlip_o | -x ö -8/10x |
| | 55 | lower_t _lip_lm_o | -1/10x ö 0 |
| | 56 | lower_t_lip_rm_o | -1/10x ö 0 |
| | 57 | raise_b_lip_lm_o | -9/10x ö -7/10x |
| | 58 | raise_b_lip_rm_o | -9/10x ö -7/10x |
| | 59 | raise_l_cornerlip | -1/2x ö -1/4x |
| | 60 | raise_r_cornerlip | -1/2x ö -1/4x |

**TABLE 5**

| JP | MPEG-4 FAP Index | FAP Name | Intensity Interval |
|---|---|---|---|
| | 3 | open_jaw | 9/10x ö 11/10x |

**TABLE 6**

| JY | MPEG-4 FAP Index | FAP Name | Intensity Interval |
|---|---|---|---|
| | 16 | push_b_lip | 9/10x ö 11/10x |
| | 17 | push_t_lip | 1/20x ö 3/20x |

**TABLE 7**

| LP | MPEG-4 FAP Index | FAP Name | Intensity Interval |
|---|---|---|---|
| | 6 | stretch_l_cornerlip | 1/3x ö 2/3x |
| | 7 | stretch_r_cornerlip | 1/3x ö 2/3x |
| | 53 | stretch_l_cornerlip_o | 1/3x ö 2/3x |
| | 54 | stretch_r_cornerlip_o | 1/3x ö 2/3x |

In these tables, the names of facial animation parameters are the same as used in the standard, to which reference is made for their definitions. Abbreviations "l" "r", "t", "b", "m", "o" indicate "left", "right", "top", "bottom", "middle" and "outer", respectively.

Using tables 3 - 7 (also stored in appropriate memory areas of CFP) it is therefore possible to reproduce a viseme with a set of FAPs by associating the relating intensity to each FAP. Said FAPs can be transferred to any facial animation system complying with MPEG-4 standard, in order to achieve the corresponding animation of a facial model.

In short, the conversion algorithm consists of the following steps:
1) taking a text string
2) splitting said text into phonemes by using the notation shown in tables 1 and 2 or an equivalent one which effects the same association with visemes.
3) considering the i-th phoneme and, by means of Tables 1 and 2, finding out the corresponding j-th viseme.
4) identifying in Table 3 the values of the macroparameters associated to the j-th viseme.
5) applying the values of the macroparameters to the FAPs shown in Table 4.

Steps 3 to 5 are repeated for all phonemes in the text string.

Said algorithm may be described also in a pseudo-code, as shown below: 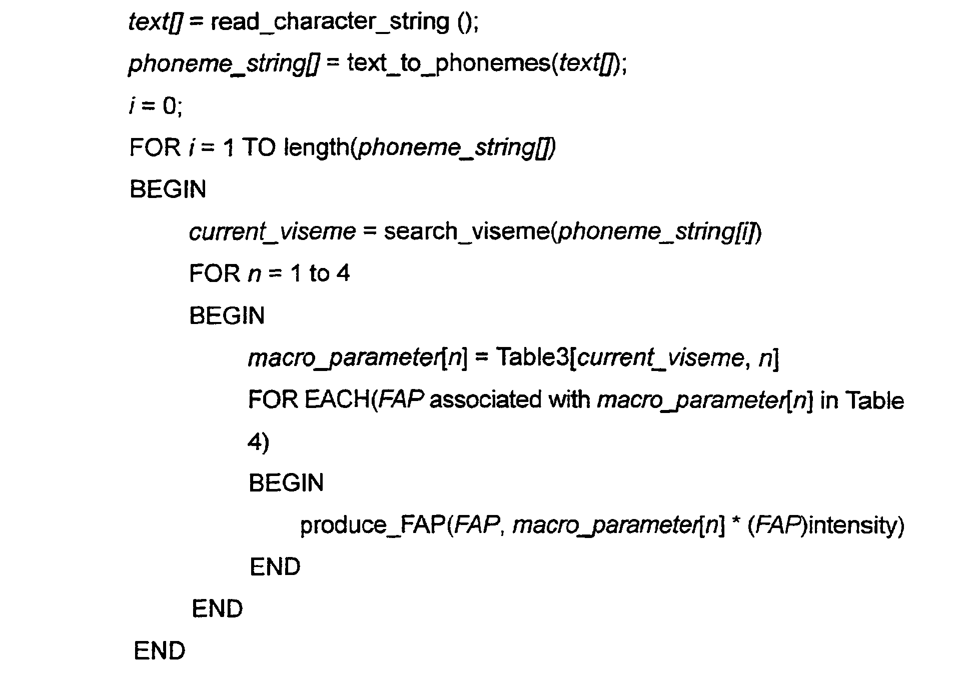 where the variables are written in italics.

The following functions are used:
- read_character_string (): it is a generic input/output function to read a string of a text;
- text_to_phonemes (*text[]*): it carries out the association of a string of characters, text *(),* to a corresponding string of phonemes selected in tables 1 and 2;
- length (*V[]*): it returns the length of a vector *v()* passed as a parameter
- search_viseme (*fon)*: it returns the viseme corresponding to phoneme *fon* passed as a parameter, upon searching it in tables 1 and 2;
- produce_FAP (*FAPindex, FAPintensity):* it generates a FAP with and index *FAPindex* and intensity *FAPintensity.* The produced FAPs are transferred to the animation subsystem, which carries them out, i.e. it applies them to the facial model;
- intensity (*FAPindex):* it returns the intensity of a FAP with an index *FAPindex,* reading it from one of the Tables 4 to 7.

The following example shows the algorithm operation. Let us consider, for example, the text sentence in Italian language "Martedì andiamo a sciare" (Tuesday we go skiing) and split it into phonemes. By using the phonemes listed in tables 1 and 2 and by separating the words through "-" for sake of clarity, a possible representation is the following: "m A: r t e d i - A:n d l a m Q - A: - S l a r e".

Let us now consider the first string of phonemes: "m A: r t e d i". One starts from the first phoneme "m" and looks at tables 1 and 2 to find out the viseme associated, in this case viseme 1. Then table 3 is used to split such a viseme into the 4 macroparameters LOH, JY, LP, LOW. The row associated with viseme 1 is:

| Viseme | LOH | JY | LOW | LP |
|---|---|---|---|---|
| 1 | -88 - -64 | -12 - -4 | 14 - 30 1 | 10 - 22 |

Then, values within the four intervals are chosen, for instance, the central values -76, -8, 22, 16.

These parameters are split into elementary FAPs by using tables 4 to 7. The intensities of the FAPs associated to a given macroparameter is multiplied by the intensity of such a macroparameter; for simplicity, the central value of the variability interval of the FAP values has been considered; the value resulting from computation are rounded up to the nearest integer:

| LOH | FAP Index | FAP Name | FAP Intensity |
|---|---|---|---|
| | 4 | lower_t_midlip | -1/10 * -76 = 8 |
| | 5 | raise_b_midlip | -9/10 * -76 = 68 |
| | 8 | lower_t_lip_lm | -1/20 * -76 = 4 |
| | 9 | lower_t_lip_rm | -1/20 * -76 = 4 |
| | 10 | raise_b_lip_lm | -8/10 * -76 = 61 |
| | 11 | raise_b_lip_rm | -8/10 * -76 = 61 |
| | 12 | raise_l_cornerlip | -1/3 * -76 = 25 |
| | 13 | raise_r_cornerlip | -1/3 * -76 = 25 |
| | 51 | lower_t_midlip_o | -1/10 * -76 = 8 |
| | 52 | raise_b_midlip_o | -9/10 * -76 = 68 |
| | 55 | lower_t_lip_lm_o | -1/20 * -76 = 4 |
| | 56 | lower_t_lip_rm_o | -1/20 * -76 = 4 |
| | 57 | raise_b_lip_lm_o | -8/10 * -76 = 61 |
| | 58 | raise_b_lip_rm_o | -8/10 * -76 = 61 |
| | 59 | raise_l_cornerlip | -1/3 * -76 = 25 |
| | 60 | raise_r_cornerlip | -1/3 * -76 = 25 |

| JY | FAP Index | FAP Name | FAP Intensity |
|---|---|---|---|
| | 3 | open_jaw | 1 * -8 = -8 |

| LP | FAP Index | FAP Name | FAP Intensity |
|---|---|---|---|
| | 16 | push_b_lip | 1 * 22 = 22 |
| | 17 | push_t_lip | 1/10 * 22 = 2 |

| LOW | FAP Index | FAP Name | FAP Intensity |
|---|---|---|---|
| | 6 | stretch_l_cornerlip | ½ * 16 = 8 |
| | 7 | stretch_r_cornerlip | ½ * 16 = 8 |
| | 53 | stretch _l_cornerlip_o | ½ * 16 = 8 |
| | 54 | stretch_r_cornerlip_o | ½ * 16 = 8 |

Thus, a vector of FAPs is obtained that can be directly applied to any facial model in MPEG-4 standard.

The next phoneme: "A:" is then considered. Table 1 and 2 shows that the associated viseme is viseme 10. Then Table 3 is used to split such a viseme into macroparameters LOH, LJ, LP, LOW.

The row associated with viseme 10 is the following:

| Viseme | LOH | JY | LOW | LP |
|---|---|---|---|---|
| 10 | 304 -:516 | 274 -:464 | 28 - 52 | -79 - -43 |

Also for such a viseme, values within these intervals, for instance central values: 410, 369, 40, -61, are chosen. The splitting into elementary FAPs, by using the central values of the intervals and rounding up them to the nearest integer, leads to the following results:

| LOH | FAP Index | FAP Name | FAP Intensity |
|---|---|---|---|
| | 4 | lower_t_midlip | -1/10 * 410 = -41 |
| | 5 | raise_b_midlip | -9/10 * 410 = -369 |
| | 8 | lower_t_lip_lm | -1/20 * 410 = -20 |
| | 9 | lower_t_lip_rm | -1/20 * 410 = -20 |
| | 10 | raise_b_lip_lm | -8/10 * 410 = -328 |
| | 11 | raise_b_lip_rm | -8/10 * 410 = -328 |
| | 12 | raise_l_cornerlip | -1/3 * 410 = -137 |
| | 13 | raise_r_cornerlip | -1/3 * 410 = -137 |
| | 51 | lower_t_midlip_o | -1/10 * 410 = -41 |
| | 52 | raise_b_midlip_o | -9/10 *410 = -369 |
| | 55 | lower_t_lip_lm_o | -1/20 * 410 = -20 |
| | 56 | lower_t_lip_rm_o | -1/20 * 410 = -20 |
| | 57 | raise_b_lip_lm_o | -8/10 * 410 = -328 |
| | 58 | raise_b_lip_rm_o | -8/10 * 410 = -328 |
| | 59 | raise_l_cornerlip | -1/3 * 410 = -137 |
| | 60 | raise_r_cornerlip | -1/3 * 410 = -137 |

| JY | FAP Index | FAP Name | FAP Intensity |
|---|---|---|---|
| | 3 | open_jaw | 1 * 369 = 369 |

| LP | FAP Index | FAP Name | FAP Intensity |
|---|---|---|---|
| | 16 | push_b_lip | 1 *40 = 40 |
| | 17 | push_t_lip | 1/10 * 40 = 4 |

| LOW | FAP Index | FAP Name | FAP Intensity |
|---|---|---|---|
| | 6 | stretch_l_cornerlip | ½ * -61 = -31 |
| | 7 | stretch_r_cornerlip | ½ * -61 = -31 |
| | 53 | stretch_l_cornerlip_o | ½ * -61 = -31 |
| | 54 | stretch_r_cornerlip_o | ½ * -61 = -31 |

To obtain all the FAPs starting from the text sentence, it is sufficient to iterate this process up to the end of the string.

It is evident that what has been described is given by way of a non-limiting example and that variations and modifications may be introduced .

## Claims

1. Method for the animation, driven by an audio signal, of a synthesised model of human face complying with the ISO-IEC standard 14496, wherein the driving signal is converted into phonetic information readable by a machine and such phonetic information is transformed into facial animation parameters representative of elementary deformations to be applied to such a model through the following sequence of operations:
- converting individual phonetic information items or groups of phonetic information items into respective visemes, said visemes being information items representative of a corresponding position of the model mouth, the visemes being chosen within a set that includes a group of visemes independent of the language of the driving audio signal and a group of visemes specific for such a language, said visemes independent of the language being the visemes as defined in the ISO-IEC standard 14496;
- splitting each viseme into a group of macroparameters that characterise shapes and/or positions of the lip region and of the jaw in the model, wherein said macroparameters represent:
- vertical distance between lips, LOH
- Jaw opening, JY
- Mouth width, LOW
- Lip protrusion, LP,
and associating each of the macroparameters of a given viseme with an intensity value representative of a displacement from a neutral position as defined in the ISO-IEC standard 14496 for said model and chosen within a given interval determined in an initialisation phase so as to ensure a good naturalness of the animated model;
- converting the macroparameters into said facial animation parameters representative of deformations to be applied to the model, such facial animation parameters being chosen within a group of facial animation parameters as defined in the ISO-IEC standard 14496 and relating to the mouth movements, and associating said facial animation parameters with intensity values which depend on the intensity values of the macroparameters, and which intensity values of the facial animation parameters also are chosen within an interval designed to guarantee the naturalness of the animated model..

2. Method according to claim 1
**characterised in that** the intensity values of the macroparameters for the standard visemes are chosen inside the following intervals:
| Viseme Index | Phonemes | LOH | JY | LOW | LP |
|---|---|---|---|---|---|
| 1 | p, b, m | -88 ö -64 | 4 ö 12 | 14 ö 30 | 10 ö 22 |
| 2 | f, v | 58 ö 102 | 4 ö 15 | 66 ö 114 | -86 ö -46 |
| 3 | T,D | 188 ö 320 | 18 ö 36 | 13 ö 27 | 4 ö 12 |
| 4 | t, d | 225 ö 385 | 215 ö 365 | 53 ö 95 | -74 ö -40 |
| 5 | K,g | 107 ö 185 | 9 ö 21 | 116 ö 200 | 2 ö 8 |
| 6 | tS, dZ, S | 353 ö 613 | 328 ö 568 | 13 ö 27 | 71 ö 125 |
| 7 | s, z | 203 ö 345 | 168 ö 286 | 19 ö 39 | 2 ö 6 |
| 8 | n, l | 28 ö 52 | 4 ö 12 | 14 ö 30 | 10 ö 22 |
| 9 | r | 42+78 | 4 ö 12 | 22 ö 42 | 17 ö 35 |
| 10 | A: | 304 ö 516 | 274 ö 464 | 28 ö 52 | -79 ö -43 |
| 11 | e | 274 ö 464 | 182 ö 310 | 28 ö 52 | -79 ö -43 |
| 12 | l | 244 ö 412 | 182 ö 310 | 28 ö 52 | 28 ö 52 |
| 13 | Q | 24 ö 412 | 134 ö 230 | -206 ö -120 | 74 ö 130 |
| 14 | U | 244 ö 412 | 148 ö 252 | -206 ö -120 | 74 ö 130 |
the intensity values being expressed in units of facial animation parameters, such as defined by the ISO-IEC standard 14496.

3. Method according to claim 1 or 2, **characterised in that** said language-specific visemes are visemes associated to phonetic information relating to the stressed vowels and the intensity values of the macroparameters for the language-specific visemes are chosen within the following intervals:
| Viseme Index | Phonemes | LOH | JY | LOW | LP |
|---|---|---|---|---|---|
| 15 | a | 414 ö 814 | 413 ö 733 | 13 ö 27 | -156 ö -90 |
| 16 | E | 304 ö 516 | 213 ö 361 | 13 ö 27 | -79 ö -43 |
| 17 | i | 274 ö 464 | 213 ö 361 | 13 ö 27 | -79 ö -43 |
| 18 | O | 274 ö 464 | 224 ö 380 | -284 ö -166 | 90 ö 156 |
| 19 | u | 244 ö 412 | 149 ö 255 | -284 ö -166 | 90 ö 156 |

4. Method according to any of the previous claims, **characterised in that** for splitting the macroparameters the following facial animation parameters (FAP) are used
| a) Macroparameter LOH | |
|---|---|
| ISO/IEC FAP Index | FAP Name |
| 4 | lower_t_midlip |
| 5 | raise_b_midlip |
| 8 | lower_t_lip_lm |
| 9 | lower_t_lip_rm |
| 10 | raise_b_lipm_lm |
| 11 | raise_b_lip rm |
| 12 | raise_l_cornerlip |
| 13 | raise_r_cornerlip |
| 51 | lower_t_midlip_o |
| 52 | raise_b_midlip_o |
| 55 | lower_t_lip_lm_o |
| 56 | lower_t_lip_rm_o |
| 57 | raise_b_lip_lm_o |
| 58 | raise_b_lip_rm_o |
| 59 | raiso_l_cornerlip |
| 60 | raise_r_cornerlip |
| b) Macroparameter JY | |
|---|---|
| ISO/IEC FAP Index | FAP Name |
| 3 | open_jaw C |
| c) Macroparameter LP | |
|---|---|
| ISO/IEC FAP Index | FAP Name |
| 16 | push_b_lip |
| 17 | push_t_lip |
| d) Macroparameter LOW | |
|---|---|
| ISO/IEC FAP Index | FAP Name |
| 6 | stretch_l_cornerlip |
| 7 | stretch_r_cornerlip |
| 53 | stretch_l_cornerlip_o |
| 54 | stretch_r_comerlip_o |

5. Method according to any of the previous claims, **characterised in that** the facial animation parameters are associated with the following intensity values:
| a) Macroparameter LOH | |
|---|---|
| ISO/IEC FAP Index | Intensity Interval |
| 4 | -3/20x ö -1/20x |
| 5 | -x ö -8/10x |
| 8 | -1/10x ö 0 |
| 9 | -1/10x ö 0 |
| 10 | -9/10x ö -7/10x |
| 11 | -9/10x ö 7/1 x |
| 12 | -1/2x ö -1/4x |
| 13 | -1/2x ö -1/4x |
| 51 | -3/20x ö -1/20x |
| 52 | -x ö -8/10x |
| 55 | -1/10x ö 0 |
| 56 | -1/10x ö 0 |
| 57 | -9/10x ö -7/1 0x |
| 58 | -9/1 0x ö -7/10x |
| 59 | -1/2x ö -1/4x |
| 60 | -1/2x ö -1/4x |
| b) Macroparameter JY | |
|---|---|
| ISO/IEC FAP Index | Intensity Interval |
| 3 | 9/10x ö 11/10x |
| c) Macroparameter LP | |
|---|---|
| ISO/IEC FAP Index | Intensity Interval |
| 16 | 9/10x ö 11/10x |
| 17 | 1/20x ö 3/20x |
| d) Macroparameter LOW | |
|---|---|
| ISO/IEC FAP Index | Intensity Interval |
| 6 | 1/3x ö 2/3x |
| 7 | 1/3x ö 2/3x |
| 53 | 1/3x ö 2/3x |
| 54 | 1/3x ö 213x |
where x is the macroparameter intensity value for the specific viseme.

6. Method according to one of the preceding claims, **characterised by** said group of visemes independent of the language and said group of standard facial animation parameters being the visemes and the facial animation parameters respectively defined by ISO-IEC standard 14496.

7. Method according to one of the preceding claims, wherein said facial animation parameters are as defined in the ISO-IEC standard 14496.

8. Apparatus for the animation, driven by an audio signal, of a synthesised model of human face complying with the ISO-IEC standard 14496, including:
- means (SY) for generating phonetic information representative of the driving audio signal, readable by a machine,
- means (CFP) for converting phonetic information into facial animation parameters representative of elementary deformations to be applied to said model, said conversion means (CFP) being arranged for: converting individual phonetic information items or groups of phonetic information items into respective visemes, said visemes being information items representative of a corresponding mouth position in the synthesised model, the visemes being read from a memory containing a group of visemes independent of the language of the driving audio signal and a group of visemes specific for such a language, said visemes independent of the language being the visemes as defined in the ISO-IEC standard 14496; splitting each viseme into a group of macroparameters that characterise mouth shape and positions of lips and jaw in the model; wherein said macroparameters represent:
- vertical distance between lips, LOH
- Jaw opening, JY
- Mouth width, LOW
- Lip protrusion, LP,
associating each of the macroparameters of a given viseme with an intensity value representative of a displacement from a neutral position as defined in the ISO-IEC standard 14496 for said model and chosen within a given interval determine in an initialisation phase, so as to guarantee a good naturalness of the animated model; converting the macroparameters into said facial animation parameters representative of deformations to be applied to such a model, which facial animation parameters are chosen within a group of facial animation parameters as defined in the ISO-IEC standard 14496 and relating to mouth movements; associating such facial animation parameters with intensity values which depend on the intensity values of the macroparameters, and are also chosen within an interval so designed as to guarantee the naturalness of the animated model;
- means (AF) for applying the parameters to the model, under the control of the means for generating the phonetic information.

9. Apparatus according to claim 8, **characterised in that** such conversion means (CFP) are a part of a unit for decoding a multimedia signal stream coded according to the ISO/IEC standard 14496.

10. Apparatus according to claim 8 or 9, wherein said group of visemes is independent of the language and said group of standard facial animation parameters are the visemes and the facial animation parameters respectively defined by ISO-IEC standard 14496.

## Patentansprüche

1. Verfahren zum Animieren, angesteuert durch ein Audiosignal, eines synthetischen Modells des menschlichen Gesichtes, welches der ISO-IEC Norm 14496 entspricht, wobei das Ansteuerungssignal in phonetische Informationen konvertiert ist, welche von einer Maschine gelesen werden können, und solche phonetischen Informationen in Gesichtsanimationsparameter umgewandelt sind, die für elementare Verformungen repräsentativ sind, welche auf solch ein Modell durch die folgende Sequenz von Operationen angewendet werden sollen:
- Konvertieren der einzelnen phonetischen Informationseinheiten oder Gruppen von phonetischen Informationseinheiten in entsprechende Viseme, wobei die Viseme Informationseinheiten sind, die repräsentativ für eine entsprechende Position des Modellmundes sind, wobei die Viseme innerhalb einer Menge gewählt sind, die eine Gruppe von Visemen, welche unabhängig von der Sprache des ansteuernden Audiosignals ist, und eine Gruppe von Visemen umfasst, welche spezifisch für eine solche Sprache sind, wobei die Viseme, die unabhängig von der Sprache sind, die in der ISO-IEC Norm 14496 definierten Viseme sind;
- Aufspalten jedes Visems in eine Gruppe von Makroparametern, die Formen und/oder Positionen des Lippenbereichs und des Kiefers im Modell charakterisieren, wobei die Makroparameter folgendes repräsentieren:
- senkrechter Abstand zwischen Lippen, LOH
- Kieferöffnung, JY
- Mundbreite, LOW
- Lippenprotrusion, LP, und Verknüpfen jedes Makroparameters eines gegebenen Visems mit einem Intensitätswert, der repräsentativ für eine Verschiebung aus einer neutralen Position nach Definition in der ISO-IEC Norm 14496 ist und in einem gegebenen Intervall in einer Initialisierungsphase gewählt ist, um so eine geeignete Natürlichkeit des animierten Modells sicherzustellen;
- Konvertieren der Makroparameter in Gesichtsanimationsparameter, die für Verformungen repräsentativ sind, welche auf das Modell angewendet werden sollen, wobei solche Gesichtsanimationsparameter in einer Gruppe von Gesichtsanimationsparametem gewählt sind, wie in der ISO-IEC Norm 14496 definiert, und sich auf die Mundbewegungen beziehen, und Verknüpfen der Gesichtsanimationsparameter mit Intensitätswerten, die von den Intensitätswerten der Makroparameter abhängig sind, und wobei die Intensitätswerte der Gesichtsanimationsparameter ebenfalls in einem Intervall gewählt sind, mit dem die Natürlichkeit des animierten Modells gewährleistet werden soll.

2. Verfahren nach Anspruch 1,
**dadurch gekennzeichnet, dass** die Intensitätswerte der Makroparameter für die Standardviseme in den folgenden Intervallen gewählt sind:
| Visem-Index | Phoneme | LOH | JY | LOW | LP |
|---|---|---|---|---|---|
| 1 | p, b, m | -88 ö -64 | 4 ö 12 | 14 ö 30 | 10 ö 22 |
| 2 | f, v | 58 ö 102 | 4 ö 15 | 66 ö 114 | -86 ö -46 |
| 3 | T, D | 188 ö320 | 18 ö 36 | 13 ö 27 | 4 ö 12 |
| 4 | t, d | 225 ö 385 | 215 ö 365 | 53 ö95 | -74 ö -40 |
| 5 | K, g | 107 ö 185 | 9 ö 221 | 116 ö 200 | 2 ö 8 |
| 6 | tS, dZ, S | 353 ö 613 | 328 ö 568 | 13 ö27 | 71 ö 125 |
| 7 | s, z | 203 ö 345 | 168 ö 286 | 19 ö 339 | 2 ö 6 |
| 8 | n, l | 28 ö 52 | 4 ö 12 | 14 ö 30 | 10 ö 22 |
| 9 | r | 42 ö 78 | 4 ö 12 | 22 ö 42 | 17 ö 35 |
| 10 | A: | 304 ö 516 | 274 ö 464 | 28 ö 52 | -79 ö -43 |
| 11 | e | 274 ö 464 | 182 ö 310 | 28 ö52 | -79 ö -43 |
| 12 | 1 | 244 ö 412 | 182 ö 310 | 28 ö 52 | 28 ö 52 |
| 13 | Q | 244 ö 412 | 134 ö 230 | -206 ö -120 | 74 ö 130 |
| 14 | U | 244 ö 412 | 148 ö 252 | -206 ö -120 | 74 ö 130 |
wobei die Intensitätswerte in Einheiten der Gesichtsanimationsparameter, wie durch die ISO-IEC Norm 14496 definiert, ausgedrückt sind.

3. Verfahren nach Anspruch 1 oder 2, **dadurch gekennzeichnet, dass** die sprachspezifischen Viseme Viseme sind, die mit phonetischen Informationen verknüpft sind, welche sich auf die betonten Vokale beziehen, und die Intensitätswerte der Makroparameter für die sprachspezifischen Viseme in den folgenden Intervallen gewählt sind:
| Visem-Index | Phoneme | LOH | JY | LOW | LP |
|---|---|---|---|---|---|
| 15 | a | 414 ö 814 | 413 ö 733 | 13 ö 27 | -156 ö -90 |
| 16 | E | 304 ö 516 | 213 ö 361 | 13 ö 27 | -79 ö -43 |
| 17 | i | 274 ö464 | 213 ö361 | 13 ö 27 | -79 ö -43 |
| 18 | O | 274 ö 464 | 224 ö 380 | -284 ö -166 | 90 ö156 |
| 19 | u | 244 ö 412 | 149 ö 255 | -284 ö -166 | 90 ö 156 |

4. Verfahren nach einem der vorherigen Ansprüche, **dadurch gekennzeichnet, dass** zum Aufspalten der Makroparameter die folgenden Gesichtsanimationsparameter (FAP) verwendet werden.
| a) Makroparameter LOH | |
|---|---|
| ISO-IEC FAP Index | FAP Name |
| 4 | lower_t_midlip |
| 5 | raise_b_midlip |
| 8 | lower_t_lip_lm |
| 9 | lower_t_lip_rm |
| 10 | raise_b_lip_lm |
| 11 | raise_b_lip_rm |
| 12 | raise_l_cornerlip |
| 13 | raise_r_cornerlip |
| 51 | lower_t_midlip_o |
| 52 | raise_b_midlip_o |
| 55 | lower_t_lip_lm_o |
| 56 | lower_t_lip_rm_o |
| 57 | raise_b_lip_lm_o |
| 58 | raise_b_lip_rm_o |
| 59 | raise_l_cornerlip |
| 60 | raise_r_cornerlip |
| b) Makroparameter JY | |
|---|---|
| ISO-IEC FAP Index | FAP Name |
| 3 | open_jaw |
| c) Makroparameter LP | |
|---|---|
| ISO-IEC FAP Index | FAP Name |
| 16 | push_b_lip |
| 17 | push_t_lip |
| d) Makroparameter LOW | |
|---|---|
| ISO-IEC FAP Index | FAP Name |
| 6 | stretch_l_cornerlip |
| 7 | stretch_r_cornerlip |
| 53 | stretch_l_cornerlip_o |
| 54 | stretch_r_cornerlip_o |

5. Verfahren nach einem der vorherigen Ansprüche, **dadurch gekennzeichnet, dass** die Gesichtsanimationsparameter mit den folgenden Intensitätswerten verknüpft sind:
| a) Makroparameter LOH | |
|---|---|
| ISO-IEC FAP Index | Intensitätsintervall |
| 4 | -3/20x ö -1/20x |
| 5 | -x ö -8/10x |
| 8 | -1/10x ö 0 |
| 9 | -1/10x ö 0 |
| 10 | -9/10x ö -7/10x |
| 11 | -9/10x ö 7/1x |
| 12 | -1/2x ö -1/4x |
| 13 | -1/2x ö -1/4x |
| 51 | -3/20x ö -1/20x |
| 52 | -x ö -8/10x |
| 55 | -1/10x ö 0 |
| 56 | -1/10x ö 0 |
| 57 | -9/10x ö-7/10x |
| 58 | -9/10x ö -7/10x |
| 59 | -1/2x ö -1/4x |
| 60 | -1/2x ö -1/4x |
| b) Makroparameter JY | |
|---|---|
| ISO-IEC FAP Index | Intensitätsintervall |
| 3 | 9/10x ö 11/10x |
| c) Makroparameter LP | |
|---|---|
| ISO-IEC FAP Index | Intensitätsintervall |
| 16 | 9/10x ö 11/10x |
| 17 | 1/20x ö 3/20x |
| d) Makroparameter LOW | |
|---|---|
| ISO-IEC FAP Index | Intensitätsintervall |
| 6 | 1/3x ö 2/3x |
| 7 | 1/3x ö 2/3x |
| 53 | 1/3x ö 2/3x |
| 54 | 1/3x ö 2/3x |
wobei x der Makroparameter-Intensitätswert für das bestimmte Visem ist.

6. Verfahren nach einem der vorherigen Ansprüche, **gekennzeichnet durch** die Gruppe von Visemen, die unabhängig von der Sprache sind, und **durch** die Gruppe von Standard-Gesichtsanimationsparametem, die Viseme sind, bzw. die Gesichtsanimationsparameter, die **durch** die ISO-IEC Norm 14496 definiert sind.

7. Verfahren nach einem der vorherigen Ansprüche, wobei die Gesichtsanimationsparameter in der ISO-IEC Norm 14496 definiert sind.

8. Vorrichtung, angesteuert durch ein Audiosignal, zum Animieren eines synthetischen Modells eines menschlichen Gesichtes, das der ISO-IEC Norm 14496 entspricht, einschließlich:
- Mittel (SY) zum Erzeugen phonetischer Informationen, die repräsentativ für das ansteuernde Audiosignal sind, das von einer Maschine gelesen werden kann,
- Mittel (CFP) zum Konvertieren von phonetischen Informationen in Gesichtsanimationsparameter, die repräsentativ für elementare Verformungen sind, welche auf das Modell angewendet werden sollen, wobei das Konversionsmittel (CFP) für folgendes ausgelegt ist: Konvertieren individueller phonetischer Informationseinheiten oder Gruppen von phonetischen Informationseinheiten in die entsprechenden Viseme, wobei Viseme Informationseinheiten sind, die repräsentativ für eine entsprechende Mundstellung im synthetischen Modell sind, wobei die Viseme aus einem Speicher ausgelesen sind, der eine Gruppe von Visemen enthält, welche unabhängig von der Sprache des ansteuernden Audiosignals sind, und eine Gruppe von Visemen, die spezifisch für solch eine Sprache sind,
wobei die Viseme, die unabhängig von der Sprache sind, die in der ISO-IEC Norm 14496 definierten Viseme sind, Aufspalten jedes Visems in eine Gruppe von Makroparametern, die die Mundform und Positionen der Lippen und des Kiefers im Modell charakterisieren; wobei die Makroparameter folgendes repräsentieren:
- senkrechter Abstand zwischen Lippen, LOH
- Kieferöffnung, JY
- Mundbreite, LOW
- Lippenprotrusion, LP,
wobei jeder der Makroparameter eines gegebenen Visems mit einem Intensitätswert verknüpft ist, der repräsentativ für eine Verschiebung von einer neutralen Position, wie in der ISO-IEC 14496 definiert, für das Modell ist und innerhalb eines gegebenen Intervalls gewählt ist, welches in einer Initialisierungsphase bestimmt ist, um so eine geeignete Natürlichkeit des animierten Modells zu gewährleisten; Konvertieren der Makroparameter in Gesichtsanimationsparameter, die repräsentativ für die für Verformungen sind, welche auf das Modell angewendet werden sollen, wobei solche Gesichtsanimationsparameter in der ISO-IEC Norm 14496 definiert sind, und Animationsparameter mit Intensitätswerten, die von den Intensitätswerten der Makroparameter abhängig sind, und in einem Intervall gewählt sind, mit dem die Natürlichkeit des animierten Modells gewährleistet werden soll;
- Mittel (AF) zum Anwenden der Parameter auf das Modell unter Steuerung des Mittels zum Erzeugen der phonetischen Informationen.

9. Vorrichtung nach Anspruch 8, **dadurch gekennzeichnet, dass** ein solches Konvertierungsmittel (CFP) Teil einer Einheit zum Decodieren eines Multimediasignalstroms ist, welcher gemäß der ISO-IEC Norm 14496 codiert ist.

10. Verfahren nach Anspruch 8 oder 9, wobei die Gruppe von Visemen unabhängig von der Sprache ist und die Gruppe von Standard-Gesichtsanimationsparametem die Viseme bzw. die Gesichtsanimationsparameter sind, die durch die ISO-IEC Norm 14496 definiert sind.

## Revendications

1. Procédé pour l'animation, commandée par un signal audio, d'un modèle synthétisé de visage humain se conformant à la norme ISO-IEC 14496, dans lequel le signal de commande est converti en informations phonétiques lisibles par une machine et de telles informations phonétiques sont transformées en paramètres d'animation faciale représentatifs de déformations élémentaires devant être appliquées à un tel modèle par l'intermédiaire de la séquence d'opérations suivante :
- la conversion d'articles d'informations phonétiques individuels ou de groupes d'articles d'informations phonétiques en visèmes respectifs, lesdits visèmes étant des articles d'informations représentatifs d'une position correspondante de la bouche du modèle, les visèmes étant choisis à l'intérieur d'un ensemble qui comprend un groupe de visèmes indépendants de la langue du signal audio de commande et un groupe de visèmes spécifiques pour une telle langue, lesdits visèmes indépendants de la langue étant les visèmes tels que définis dans la norme ISO-IEC 14496 ;
- la séparation de chaque visème en un groupe de macroparamètres qui caractérisent des formes et/ou des positions de la région des lèvres et de la mâchoire dans le modèle, où lesdits macroparamètres représentent :
- la distance verticale entre les lèvres, LOH
- l'ouverture de la mâchoire, JY
- la largeur de la bouche, LOW
- la protrusion des lèvres, LP,
et l'association de chacun des macroparamètres d'un visème donné à une valeur d'intensité représentative d'un déplacement depuis une position neutre tel que défini dans la norme ISO-IEC 14496 pour ledit modèle et choisie à l'intérieur d'un intervalle donné déterminé dans une phase d'initialisation afin d'assurer un bon naturel du modèle animé ;
- la conversion des macroparamètres en lesdits paramètres d'animation faciale représentatifs de déformations devant être appliquées au modèle, de tels paramètres d'animation faciale étant choisis à l'intérieur d'un groupe de paramètres d'animation faciale tel que défini dans la norme ISO-IEC 14496 concernant les mouvements de la bouche, et l'association desdits paramètres d'animation faciale à des valeurs d'intensité qui dépendent des valeurs d'intensité des macroparamètres, et lesquelles valeurs d'intensité des paramètres d'animation faciale sont également choisies à l'intérieur d'un intervalle conçu pour garantir le naturel du modèle animé.

2. Procédé selon la revendication 1,
**caractérisé en ce que** les valeurs d'intensité des macroparamètres pour les visèmes standard sont choisies à l'intérieur des intervalles suivants :
| Index des visèmes | Phonèmes | LOH | JY | LOW | LP |
|---|---|---|---|---|---|
| 1 | p,b, m | -88 ö -64 | 4 ö 12 | 14 ö 30 | 10 ö 22 |
| 2 | f, v | 58 ö 102 | 4 ö 15 | 66 ö 114 | -86 ö -46 |
| 3 | T,D | 188 ö 320 | 18 ö 36 | 13 ö 27 | 4 ö 12 |
| 4 | t, d | 225 ö 385 | 215 ö 365 | 53 ö 95 | -74 ö -40 |
| 5 | K,g | 107 ö 185 | 9 ö 21 | 116 ö 200 | 2 ö 8 |
| 6 | tS, dZ, S | 353 ö 613 | 328 ö 568 | 13 ö 27 | 71 ö 125 |
| 7 | s, z | 203 ö 345 | 168 ö 286 | 19 ö 39 | 2 ö 6 |
| 8 | n,l | 28 ö 52 | 4 ö 12 | 14 ö 30 | 10 ö 22 |
| 9 | r | 42 ö 78 | 4 ö 12 | 22 ö 42 | 17 ö 35 |
| 10 | A: | 304 ö 516 | 274 ö 464 | 28 ö 52 | -79 ö -43 |
| 11 | e | 274 ö 464 | 182 ö 310 | 28 ö 52 | -79 ö -43 |
| 12 | l | 244 ö 412 | 182 ö 310 | 28 ö 52 | 28 ö 52 |
| 13 | Q | 244 ö 412 | 134 ö 230 | 206 ö -120 | 74 ö 130 |
| 14 | U | 244 ö 412 | 148 ö 252 | -206 ö -120 | 74 ö 130 |
les valeurs d'intensité étant exprimées en unités de paramètres d'animation faciale, tel que défini par la norme ISO-IEC 14496.

3. Procédé selon la revendication 1 ou 2, **caractérisé en ce que** lesdits visèmes spécifiques à la langue sont des visèmes associés à des informations phonétiques concernant les voyelles accentuées et les valeurs d'intensité des macroparamètres pour les visèmes spécifiques à la langue sont choisies à l'intérieur des intervalles suivants :
| Index des visèmes | Phonèmes | LOH | JV | LOW | LP |
|---|---|---|---|---|---|
| 15 | a | 414 ö 814 | 413 ö 733 | 13 ö 27 | -156 ö -90 |
| 16 | E | 304 ö 516 | 213 ö 361 | 13 ö 27 | -79 ö -43 |
| 17 | i | 274 ö 464 | 213 ö 361 | 13 ö 27 | -79 ö -43 |
| 18 | O | 274 ö 464 | 224 ö 380 | -284 ö -166 | 90 ö 156 |
| 19 | u | 244 ö 412 | 149 ö 255 | -284 ö -166 | 90 ö 156 |

4. Procédé selon l'une quelconque des revendications précédentes, **caractérisé en ce que** pour la séparation des macroparamètres, les paramètres d'animation faciale (FAP) suivants sont utilisés
| a) Macroparamètre LOH | |
|---|---|
| Index FAP ISO/IEC | Nom FAP |
| 4 | lower_t_midlip |
| 5 | raise_b_midlip |
| 8 | lower_t_lip_lm |
| 9 | lower_t_lip_rm |
| 10 | raise_b_lip_lm |
| 11 | raise_b_lip_rm |
| 12 | raise_l_cornerlip |
| 13 | ralse_r_cornerlip |
| 51 | lower_t_midlip_o |
| 52 | raise_b_midlip_o |
| 55 | lower_t_lip_lm_o |
| 56 | lower_t_lip_rm_o |
| 57 | raise_b_lip_lm_o |
| 58 | raise_b_lip_rm_o |
| 59 | raise_l_cornerlip |
| 60 | raise_r_oornerlip |
| b) Macroparamètre JY | |
|---|---|
| Index FAP ISO/IEC | Nom FAP |
| 3 | open_jaw |
| c) Macroparamètre LP | |
| Index FAP ISO/IEC | Nom FAP |
| 16 | push_b_lip |
| 17 | push_t_lip |
| | |
| d) Macroparamètre LOW | |
|---|---|
| Index FAP ISO/IEC | Nom FAP |
| 6 | stretch_l_cornerlip |
| 7 | stretch_r_cornerlip |
| 53 | stretch_l_cornerlip_o |
| 54 | stretch_r_comerlip_o |

5. Procédé selon l'une quelconque des revendications précédentes, **caractérisé en ce que** les paramètres d'animation faciale sont associés aux valeurs d'intensité suivantes :
| a) Macroparamètre LOW | |
|---|---|
| Index FAP ISO/IEC | Intervalle d'intensité |
| 4 | -3/20x ö -1/20x |
| 5 | -x ö -8/10x |
| 8 | -1/10x ö 0 |
| 9 | -1/10x ö 0 |
| 10 | -9/10x ö -7/10x |
| 11 | -9/10x ö 7/1x |
| 12 | -1/2x ö -1/4x |
| 13 | -1/2x ö -1/4x |
| 51 | -3/20x ö -1/20x |
| 52 | -x ö -8/10x |
| 55 | -1/10x ö 0 |
| 56 | -1/10x ö 0 |
| 57 | -9/10x ö -7/10x |
| 58 | -9/10x ö -7/10x |
| 59 | -1/2x ö -1/4x |
| 60 | -12x ö -1/4x |
| b) Macroparamètre JY | |
|---|---|
| Index FAP ISO/IEC | Intervalle d'intensité |
| 3 | 9/10x ö 11/10x |
| c) Macroparamètre LP | |
|---|---|
| Index FAP ISO/IEC | Intervalle d'intensité |
| 16 | 9/10x ö 11/10x |
| 17 | 1/20x ö 3/20x |
| | |
| d) Macroparamètre LOW | |
|---|---|
| Index FAP ISO/IEC | Intervalle d'intensité |
| 6 | 1/3x ö 2/3x |
| 7 | 1/3x ö 2/3x |
| 53 | 1/3x ö 2/3x |
| 54 | 1/3x ö 2/3x |
où x est la valeur d'intensité du macroparamètre pour le visème spécifique.

6. Procédé selon l'une des revendications précédentes, **caractérisé par** ledit groupe de visèmes indépendants de la langue et ledit groupe de paramètres d'animation faciale standard étant les visèmes et les paramètres d'animation faciale respectivement définis par la norme ISO-IEC 14496.

7. Procédé selon l'une des revendications précédentes, dans lequel lesdits paramètres d'animation faciale sont tels que définis dans la norme ISO-IEC 14496.

8. Appareil pour l'animation, commandée par un signal audio, d'un modèle synthétisé de visage humain se conformant à la norme ISO-IEC 14496, comprenant :
- des moyens (SY) pour générer des informations phonétiques représentatives du signal audio de commande, lisibles par une machine
- des moyens (CFP) pour convertir des informations phonétiques en paramètres d'animation faciale représentatifs de déformations élémentaires devant être appliquées audit modèle, lesdits moyens de conversion (CFP) étant agencés pour : convertir des articles d'informations phonétiques individuels ou des groupes d'articles d'informations phonétiques en visèmes respectifs, lesdits visèmes étant des articles d'informations représentatifs d'une position de la bouche correspondante dans le modèle synthétisé, les visèmes étant lus depuis une mémoire contenant un groupe de visèmes indépendants de la langue du signal audio de commande et un groupe de visèmes spécifiques pour une telle langue, lesdits visèmes indépendants de la langue étant les visèmes tels que définis dans la norme ISO-IEC 14496 , séparer chaque visème en un groupe de macroparamètres qui caractérisent la forme de la bouche et les positions des lèvres et de la mâchoire dans le modèle , où lesdits macroparamètres représentent :
- la distance verticale entre les lèvres, LOH
- l'ouverture de la mâchoire, JY
- la largeur de la bouche, LOW
- la protrusion des lèvres, LP,
associer chacun des macroparamètres d'un visème donné à une valeur d'intensité représentative d'un déplacement depuis une position neutre tel que défini dans la norme ISO-IEC 14496 pour ledit modèle et choisie à l'intérieur d'un intervalle donné déterminé dans une phase d'initialisation, afin de garantir un bon naturel du modèle animé , convertir les macroparamètres en lesdits paramètres d'animation faciale représentatifs de déformations devant être appliquées à un tel modèle, lesquels paramètres d'animation faciale sont choisis à l'intérieur d'un groupe de paramètres d'animation faciale tel que défini dans la norme ISO-IEC 14496 concernant les mouvements de la bouche , associer de tels paramètres d'animation faciale à des valeurs d'intensité qui dépendent des valeurs d'intensité des macroparamètres, et sont également choisies à l'intérieur d'un intervalle conçu de manière à garantir le naturel du modèle animé ,
- des moyens (AF) pour appliquer les paramètres au modèle, sous le contrôle des moyens pour générer les informations phonétiques.

9. Appareil selon la revendication 8, **caractérisé en ce que** de tels moyens de conversion (CFP) font partie d'une unité pour décoder un flux de signaux multimédia codé selon la norme ISO/IEC 14496.

10. Appareil selon la revendication 8 ou 9, dans lequel ledit groupe de visèmes est indépendant de la langue et ledit groupe de paramètres d'animation faciale standard sont les visèmes et les paramètres d'animation faciale respectivement définis par la norme ISO-IEC 14496.
